# FASCICULE DE BREVET EUROPEEN

(11) **EP 4 194 193 B1**
(45) Date de publication et mention de la délivrance du brevet: **14.08.2024**
(21) Numéro de dépôt: 22211270.8
(22) Date de dépôt: 03.12.2022
(51) Int. Cl.: B32B 1/00, B32B 3/12, B32B 3/26, B32B 7/14

(54) **OUTILLAGE D'ASSEMBLAGE D'UNE STRUCTURE ALVÉOLAIRE, DISPOSITIF D'ASSEMBLAGE COMPRENANT LEDIT OUTILLAGE ET PROCÉDÉ DE FABRICATION D'UNE STRUCTURE ALVÉOLAIRE UTILISANT LEDIT OUTILLAGE**
WERKZEUG ZUM ZUSAMMENBAU EINER WABENSTRUKTUR, MONTAGEVORRICHTUNG MIT DIESEM WERKZEUG UND VERFAHREN ZUR HERSTELLUNG EINER WABENSTRUKTUR MIT DIESEM WERKZEUG
TOOL FOR ASSEMBLING A CELLULAR STRUCTURE, ASSEMBLY DEVICE COMPRISING SAID TOOL AND METHOD FOR MANUFACTURING A CELLULAR STRUCTURE USING SAID TOOL

(30) Priorité: 07.12.2021 FR 2113039
(43) Date de publication de la demande: 14.06.2023
(73) Titulaire: AIRBUS OPERATIONS (S.A.S.), 31060 Toulouse (FR)
(72) Inventeur: RAVISE, Florian, 31060 TOULOUSE (FR); GAUTHIER, Maxime, 31060 TOULOUSE (FR); TEIGNE, Manuel, 31060 TOULOUSE (FR)
(74) Mandataire: Fantin, Laurent

(56) Documents cités:
- EP-A1- 3 650 332
- US-A- 3 134 705
- US-A- 3 379 594

## Description

La présente demande se rapporte à un outillage d'assemblage d'une structure alvéolaire, à un dispositif d'assemblage comprenant ledit outillage ainsi qu'à un procédé de fabrication d'une structure alvéolaire utilisant ledit outillage.

Selon un mode de réalisation, un revêtement d'absorption acoustique comprend une couche poreuse ou acoustiquement résistive en contact avec un milieu dans lequel se propagent des ondes sonores, une structure alvéolaire ainsi qu'une couche réflectrice.

Selon un mode de réalisation simplifié, la structure alvéolaire de type nid d'abeilles comprend une pluralité de cellules accolées, identiques et de section hexagonale. Ce type de structure alvéolaire convient pour certaines plages de fréquences, plus particulièrement les fréquences élevées. Pour les basses fréquences, il est nécessaire de prévoir des cellules de grand volume, ce qui conduit à augmenter l'épaisseur de la structure alvéolaire. Or, le revêtement d'absorption acoustique doit être le moins épais possible. Le document US3379594 A propose un outillage pour former une structure alvéolaire comprenant des bandes de matières assemblées les unes sur les autres. L'outillage comprend un logement délimité par un fond ainsi que des faces latérales faisant glisser les bandes de matières ondulées à l'aide d'un poussoir

Le document FR-3.098.143 propose une structure alvéolaire particulière permettant d'augmenter le volume des cellules sans augmenter l'épaisseur de la structure alvéolaire. Une telle structure alvéolaire comprend plusieurs rangées d'alvéoles comportant chacune, de manière alternée, des premières alvéoles ouvertes en direction d'une première face destinée à être plaquée contre la couche poreuse et fermées en direction d'une seconde face destinée à être plaquée contre la couche réflectrice ainsi que des deuxièmes alvéoles fermées en direction de la première face et ouvertes en direction de la seconde face, chaque première alvéole communiquant avec une deuxième alvéole via un conduit positionné à proximité de la seconde face. Ainsi, le volume d'une cellule correspond à la somme des volumes d'une première alvéole, d'une deuxième alvéole et d'un conduit.

Les rangées d'alvéoles sont toutes identiques et juxtaposées les unes aux autres en étant décalées, les premières alvéoles d'une première rangée étant accolées contre les deuxièmes alvéoles d'une deuxième rangée juxtaposée à la première.

Selon un mode de réalisation, chaque rangée d'alvéoles est obtenue en accolant deux bandes de matière. Chaque bande de matière comprend de manière alternée une première empreinte correspondant à une moitié d'une première alvéole, une deuxième empreinte correspondant à une moitié d'une deuxième alvéole ainsi qu'un sillon reliant les première et deuxième empreintes et correspondant à une moitié d'un conduit.

Selon un mode opératoire, un procédé de fabrication d'une structure alvéolaire comprend une étape de mise en forme des bandes de matière pour obtenir les empreintes et une étape d'assemblage des bandes de matière par soudage ou collage.

Cette étape d'assemblage des bandes de matière s'avère longue et délicate pour limiter les risques de déformation des empreintes.

La présente invention vise à remédier à tout ou partie des inconvénients de l'art antérieur. A cet effet, l'invention a pour objet un outillage d'assemblage d'une structure alvéolaire comprenant des première et deuxième faces ainsi que plusieurs rangées d'alvéoles comportant chacune deux bandes de matière accolées, chaque bande de matière présentant des formes en creux et des zones de jonction agencées de manière à former, lorsque les bandes de matière sont reliées, des premières alvéoles présentant chacune une première ouverture débouchant au niveau de la première face et une section transversale qui augmente en direction de la première face ainsi que des deuxièmes alvéoles présentant chacune une deuxième ouverture débouchant au niveau de la deuxième face et une section transversale qui augmente en direction de la deuxième face.

Selon l'invention, l'outillage d'assemblage comprend :
- un logement, délimité par un fond ainsi que des première et deuxième faces latérales, configuré pour loger les bandes de matière d'une structure alvéolaire à réaliser, superposées les unes sur les autres,
- une pluralité de pions configurés pour être positionnés entre les bandes de matière superposées, dans les première et/ou deuxième alvéoles.

Le logement permet de maintenir les bandes de matière superposées les unes sur les autres lors de l'assemblage. Lorsqu'ils sont positionnés dans les premières et deuxièmes alvéoles, les pions limitent les déformations des première et deuxième alvéoles lors de l'assemblage des bandes de matière entre elles.

Selon une autre caractéristique, le fond est mobile dans le logement selon une direction parallèle aux première et deuxième faces latérales.

Selon une autre caractéristique, le fond comprend une face d'appui contre laquelle est positionnée une première bande de matière déposée, ladite face d'appui présentant une géométrie complémentaire à celle de la première bande de matière déposée.

Selon une autre caractéristique, l'outillage d'assemblage comprend un pion pour chacune des première et deuxième alvéoles de la structure alvéolaire à réaliser.

Selon une autre caractéristique, chaque pion est dimensionné de manière à être entièrement logé dans la première ou deuxième alvéole dans laquelle il est positionné en fonctionnement. Selon une autre caractéristique, chaque pion présente une forme approximativement complémentaire à celle de la première ou deuxième alvéole dans laquelle il est positionné en fonctionnement.

Selon une autre caractéristique, l'outillage d'assemblage comprend au moins un système d'alimentation en pions comportant une pluralité de conduits débouchant au niveau de la première ou deuxième face latérale du logement ainsi que, pour chaque conduit, un chargeur de pions configuré pour alimenter le conduit en pions et un actionneur configuré pour pousser un pion présent au niveau du conduit dans le logement.

Selon une autre caractéristique, l'outillage d'assemblage comprend au moins un premier système d'alimentation en pions positionné au niveau de la première face latérale du logement et configuré pour insérer des pions dans les premières alvéoles en fonctionnement ainsi qu'au moins un deuxième système d'alimentation en pions positionné au niveau de la deuxième face latérale du logement et configuré pour insérer des pions dans les deuxièmes alvéoles en fonctionnement.

Selon une autre caractéristique, l'outillage d'assemblage comprend un système de compression configuré pour comprimer les bandes de matière les unes contre les autres dans le logement.

L'invention a également pour objet un dispositif d'assemblage comprenant un outillage d'assemblage selon l'une des caractéristiques précédentes, au moins un premier bras robotisé configuré pour déposer les bandes de matière dans le logement de l'outillage d'assemblage, au moins un deuxième bras robotisé configuré pour relier les bandes de matière entre elles ainsi qu'au moins une commande configurée pour contrôler de manière coordonnée des actionneurs de l'outillage d'assemblage et les premier et deuxième bras robotisés. L'invention a également pour objet un procédé d'assemblage d'une structure alvéolaire utilisant l'outillage d'assemblage selon l'invention, caractérisé en ce que le procédé comprend une succession de cycles comportant une étape de mise en place de pions, une étape de pose d'une bande de matière et une étape de jonction des bandes de matière, ces cycles étant répétés jusqu'à ce que toutes les bandes de matière soient déposées, le fond étant déplacé vers le bas entre chaque cycle

Selon un premier mode opératoire, le procédé comprend :
- au moins une étape de mise en place de pions dans les formes en creux des premières et deuxièmes alvéoles de la dernière bande de matière posée,
- une étape de pose d'une bande de matière sur les pions et la dernière bande de matière posée,
- une étape de soudage afin de relier les deux dernières bandes de matière posées, au droit des différentes zones de jonction,
- une étape de pose d'une bande de matière sur la dernière bande de matière posée,
- une étape de soudage afin de relier les deux dernières bandes de matière posées au droit des premières et deuxièmes alvéoles,
- ce cycle d'étapes étant répété jusqu'à ce que toutes les bandes de matière soient déposées, le fond étant déplacé vers le bas entre chaque cycle.

Selon une deuxième mode opératoire, le procédé comprend :
- une étape de pose d'une bande de matière sur le fond ou sur la dernière bande de matière posée,
- une étape d'enduction de colle de chaque zone de jonction de la dernière bande de matière posée,
- au moins une étape de mise en place de pions dans les formes en creux des premières et deuxièmes alvéoles de la dernière bande de matière posée,
- une étape de pose d'une bande de matière sur les pions et la dernière bande de matière posée,
- une étape d'enduction de colle des formes en saillie de la dernière bande de matière posée,
- ce cycle d'étapes étant répété jusqu'à ce que toutes les bandes de matière soient déposées, le fond étant déplacé vers le bas entre chaque cycle.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe schématique d'un conduit d'éjection d'un ensemble de propulsion d'un aéronef comprenant au moins un revêtement d'absorption acoustique qui illustre une application de l'invention,
- La figure 3 est une vue en perspective d'un revêtement d'absorption acoustique illustrant un mode de réalisation de l'invention,
- La figure 4 est une vue en perspective d'une rangée d'alvéoles d'une structure alvéolaire illustrant un mode de réalisation de l'invention,
- La figure 5 est une vue en perspective d'un dispositif d'assemblage des bandes de matière d'une structure alvéolaire illustrant un mode de réalisation de l'invention,

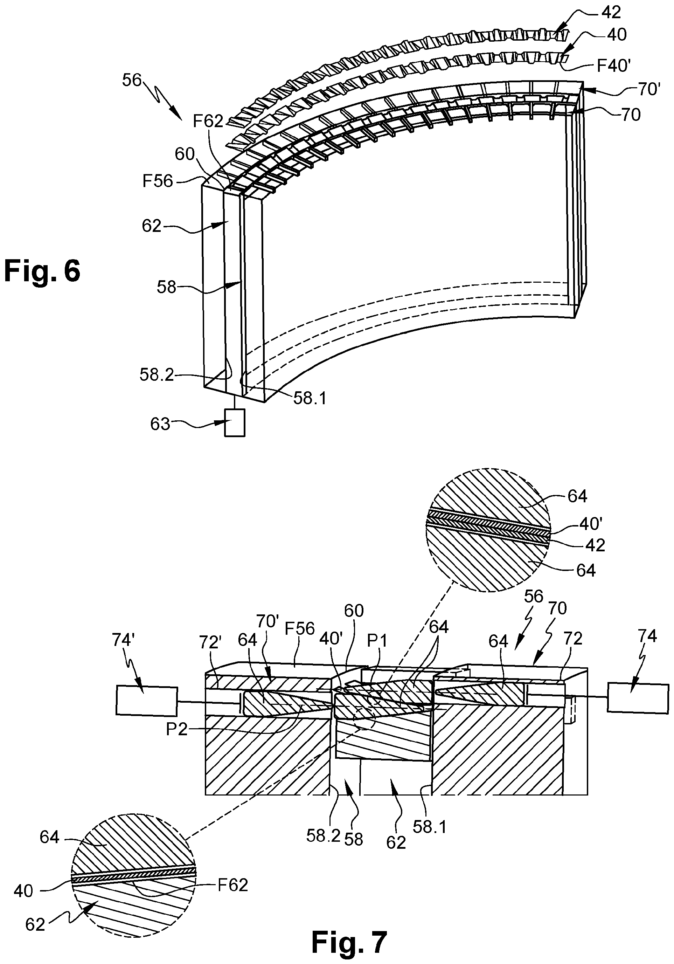

- La figure 6 est une vue en perspective d'un outillage d'assemblage des bandes de matière d'une structure alvéolaire illustrant un mode de réalisation de l'invention,
- La figure 7 est une coupe d'une partie de l'outillage d'assemblage visible sur la figure 6 avant la mise en place d'une bande de matière,
- La figure 8 est une coupe d'une partie de l'outillage d'assemblage visible sur la figure 6 après la mise en place d'une bande de matière,
- La figure 9 est une vue en perspective de l'outillage d'assemblage visible sur la figure 6, et
- La figure 10 est une coupe d'une partie de l'outillage visible sur la figure 6 après la mise en place de la dernière bande de matière.

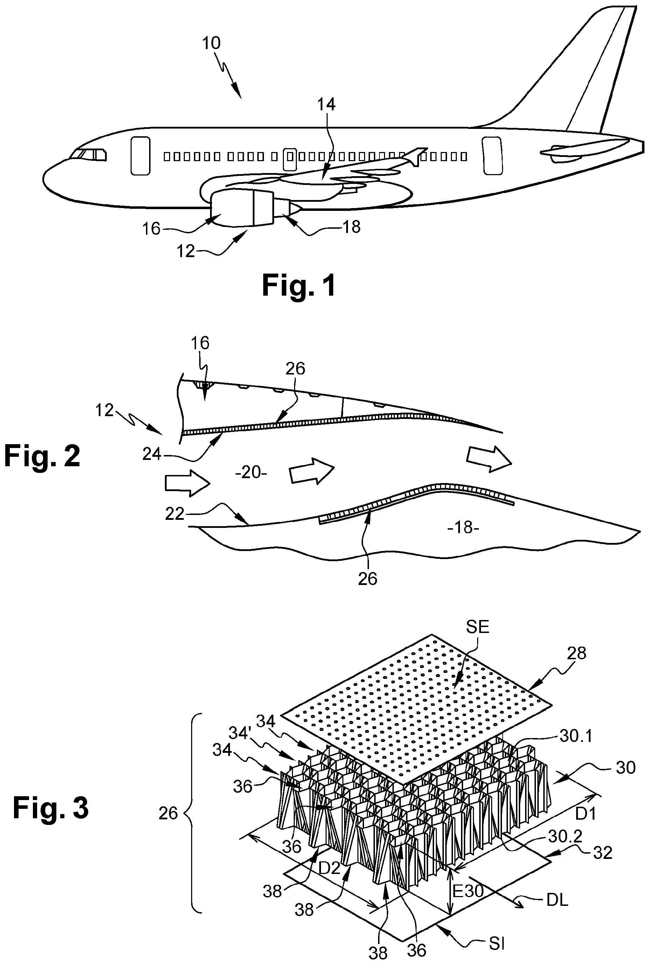

Sur la figure 1, on a représenté un aéronef 10 qui présente des ensembles de propulsion 12 fixés sous ses ailes 14. Chaque ensemble de propulsion 12 comprend une nacelle 16 et une turbomachine 18 positionnée à l'intérieur de la nacelle 16.

Selon un mode de réalisation visible sur la figure 2, l'ensemble de propulsion 12 comprend un conduit d'éjection secondaire 20, canalisant un flux d'air secondaire, qui est délimité par une paroi intérieure 22 (également appelée IFS pour « inner fixed structure » en anglais) et par une paroi extérieure 24 (également appelée OFS pour « outer fixed structure » en anglais). Selon une configuration, la paroi intérieure 22 ou la paroi extérieure 24 comprend un revêtement d'absorption acoustique 26 (également appelé panneau acoustique).

Bien que décrite appliquée à un conduit d'éjection secondaire 20, l'invention n'est pas limitée à cette application. Ainsi, le revêtement d'absorption acoustique 26 peut être positionné au niveau de toute surface en contact avec un milieu dans lequel se propagent, en fonctionnement, des ondes sonores, comme une lèvre et un conduit d'une entrée d'air d'une nacelle d'aéronef, un carter de soufflante d'une nacelle d'aéronef ou toute autre surface de l'ensemble de propulsion 12 par exemple. Quelle que soit la configuration, l'aéronef 10, et plus particulièrement un de ses ensembles de propulsion 12, comprend au moins un revêtement d'absorption acoustique 26.

Selon un mode de réalisation visible sur la figure 3, le revêtement d'absorption acoustique 26 présente une surface extérieure SE en contact avec un milieu dans lequel se propagent, en fonctionnement, des ondes sonores et une surface intérieure SI opposée à la surface extérieure SE. Le revêtement d'absorption acoustique 26 comprend, de la surface extérieure SE vers la surface intérieure SI, une couche poreuse 28 (également appelée couche acoustiquement résistive) dont une face forme la surface extérieure SE, au moins une structure alvéolaire 30 ainsi qu'une couche réflectrice 32 dont une face forme la surface intérieure SI. Ainsi, la couche poreuse 28 est plaquée contre une première face 30.1 de la structure alvéolaire 30 et la couche réflectrice 32 est plaquée contre une deuxième face 30.2 de la structure alvéolaire 30, opposée à la première face 30.1.

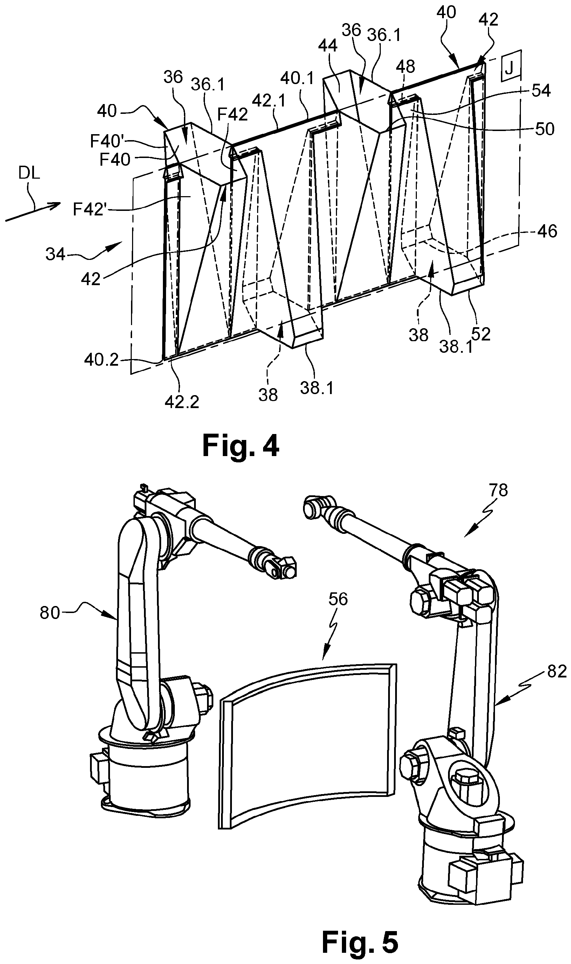

Comme illustré sur les figures 3 et 4, la structure alvéolaire 30 comprend plusieurs rangées d'alvéoles 34, 34' orientées selon une direction longitudinale DL et comportant chacune, de manière alternée, des premières alvéoles 36 qui présentent chacune une première ouverture 36.1 débouchant au niveau de la première face 30.1 et une section transversale qui augmente en direction de la première face 30.1 ainsi que des deuxièmes alvéoles 38 qui présentent chacune une deuxième ouverture 38.1 débouchant au niveau de la deuxième face 30.2 et une section transversale qui augmente en direction de la deuxième face 30.2.

Chaque rangée d'alvéoles 34, 34' comprend des première et deuxième bandes de matière 40, 42 accolées l'une contre l'autre. La première bande de matière 40 comprend une première face interne F40 orientée vers la deuxième bande de matière 42 ainsi qu'une première face externe F40' opposée à la première face interne F40. La première bande de matière 40 comprend également des premier et deuxième côtés longitudinaux 40.1, 40.2 parallèles entre eux, les premier et deuxième côtés longitudinaux 40.1, 40.2 étant positionnés respectivement au niveau des première et deuxième faces 30.1, 30.2.

En parallèle, la deuxième bande de matière 42 comprend une deuxième face interne F42 orientée vers la première bande de matière 40 ainsi qu'une deuxième face externe F42' opposée à la deuxième face interne F42. La deuxième bande de matière 42 comprend également des premier et deuxième côtés longitudinaux 42.1, 42.2 parallèles entre eux, les premier et deuxième côtés longitudinaux 42.1, 42.2 étant positionnés respectivement au niveau des première et deuxième faces 30.1, 30.2.

Chaque première bande de matière 40 comprend, au niveau de sa première face F40, des premières formes en creux 44, des deuxièmes formes en creux 46 ainsi que des zones de jonction 48 séparant les premières et deuxièmes formes en creux 44, 46, les premières et deuxièmes formes en creux 44, 46 étant alternées. Les zones de jonction 48 sont coplanaires et positionnées dans un plan de référence. Chaque première forme en creux 44 forme une première moitié d'une première alvéole 36. Chaque deuxième forme en creux 46 forme une première moitié d'une deuxième alvéole 38.

Chaque deuxième bande de matière 42 comprend, au niveau de sa première face F42, des premières formes en creux 50, des deuxièmes formes en creux 52 ainsi que des zones de jonction 54 séparant les premières et deuxièmes formes en creux 50, 52, les premières et deuxièmes formes en creux 50, 52 étant alternées. Les zones de jonction 54 sont coplanaires et positionnées dans un plan de référence. Chaque première forme en creux 50 forme une deuxième moitié d'une première alvéole 36. Chaque deuxième forme en creux 52 forme une deuxième moitié d'une deuxième alvéole 38.

Pour obtenir une rangée d'alvéoles 34, 34', les première et deuxième bandes de matière 40, 42 sont accolées l'une contre l'autre puis reliées au niveau de leurs zones de jonction 48, 54 par collage, soudage ou toute autre technique d'assemblage de sorte que les premières et deuxièmes formes en creux 44, 46, 50, 52 forment les premières et deuxièmes alvéoles 36, 38.

Selon une configuration, pour chaque rangé d'alvéoles 34, 34', les première et deuxième bandes de matière 40, 42 sont identiques, plaquées l'une contre l'autre au niveau des zones de jonction 48, 54 et disposées de manière symétrique par rapport aux plans de référence de chacune des première et deuxième bandes de matière 40, 42, plaqués l'un contre l'autre et formant un plan de jonction J.

La structure alvéolaire 30 comprend plusieurs rangées d'alvéoles 34, 34' toutes identiques et juxtaposées les unes aux autres en étant décalées, les premières alvéoles 36 d'une première rangée d'alvéoles 34 étant accolées contre les deuxièmes alvéoles 38 d'une deuxième rangée d'alvéoles 34' juxtaposée à la première rangée d'alvéoles 34.

Quel que soit le mode de réalisation, la structure alvéolaire 30 comprend une pluralité de bandes de matière 40, 42 juxtaposées les unes contre les autres, chacune des bandes de matière 40, 42 comportant, de manière alternée, des formes en creux 44, 46, 50, 52 et des zones de jonction 48, 54, les bandes de matière 40, 42 étant agencées de manière à ce que les formes en creux 44, 46, 50, 52 délimitent des première et deuxième alvéoles 36, 38 et qu'elles soient reliées entre elles au niveau des zones de jonction 48, 54 plaquées les unes contre les autres. Ainsi, chaque bande de matière 40, 42 présente une première face F40, F42 qui présente, de manière alternée, des formes en creux et des formes planes coplanaires correspondant aux zones de jonction 48, 54 ainsi qu'une deuxième face F40', F42', les formes en creux 44, 46, 50, 52 formant des formes en saillie sur ladite deuxième face F40', F42'. Selon le mode de réalisation visible sur la figure 4, les premières et deuxièmes alvéoles 36, 38 sont positionnées au niveau d'une zone entre deux bandes de matière sur deux. Selon un autre mode de réalisation, les premières et deuxièmes alvéoles pourraient être positionnées entre chaque zone entre deux bandes de matière.

La structure alvéolaire 30 présente une épaisseur E30 correspondant à la distance séparant les première et deuxième faces 30.1, 30.2. Cette épaisseur E30 est sensiblement constante. Selon une configuration simplifiée, les première et deuxième faces 30.1, 30.2 sont planes et parallèles entre elles. Généralement, les première et deuxième faces 30.1, 30.2 sont courbes et présentent sensiblement la même géométrie. La structure alvéolaire 30 présente une première dimension D1 correspondant à la dimension prise selon une première direction perpendiculaire aux plans de jonction J. La structure alvéolaire 30 présente une deuxième dimension D2 correspondant à la dimension prise selon une deuxième direction perpendiculaire à la première direction.

Le procédé de fabrication d'une structure alvéolaire 30 comprend une étape de mise en forme des bandes de matière 40, 42 pour obtenir les empreintes et une étape d'assemblage des bandes de matière 40, 42 entre elles. Les bandes de matière 40, 42 sont reliées au niveau des zones de jonction 48, 54 pour former des rangées d'alvéoles 34, 34' ainsi qu'au niveau des premières et deuxièmes alvéoles 36, 38 pour relier deux rangées d'alvéoles 34, 34' juxtaposées.

Selon un mode opératoire, l'étape de mise en forme des bandes de matière 40, 42 est obtenue par forgeage, emboutissage ou pliage. Bien entendu, l'invention n'est pas limitée à ces solutions pour la mise en forme des bandes de matière 40, 42.

Lors de l'étape d'assemblage, les bandes de matière 40, 42 sont superposées les unes sur les autres dans un outillage d'assemblage 56 qui présente un logement 58 délimité par des première et deuxième faces latérales 58.1, 58.2 séparées d'une distance sensiblement égale à l'épaisseur E30 de la structure alvéolaire 30 ainsi que par un fond 62. Les première et deuxième faces latérales 58.1, 58.2 du logement 58 présentent respectivement des géométries identiques aux première et deuxième faces 30.1, 30.2 de la structure alvéolaire 30.

L'outillage d'assemblage 56 présente une face supérieure F56 au niveau de laquelle débouche le logement 58 via une ouverture 60.

Selon un mode de réalisation, le fond 62 est statique et distant de l'ouverture 60 d'une distance supérieure ou égale à la première dimension D1 de la structure alvéolaire 30.

Selon un autre mode de réalisation, le fond 62 est mobile selon une direction parallèle aux première et deuxième faces latérales 58.1, 58.2 dans le logement 58, entre une position haute dans laquelle le fond 62 est proche de l'ouverture 60 et une position basse dans laquelle le fond 62 est distant de l'ouverture 60, les positions haute et basse étant espacées d'une distance permettant de loger la structure alvéolaire 30 à réaliser. Selon ce mode de réalisation, l'outillage d'assemblage 56 comprend un système de déplacement 63 configuré pour déplacer le fond 62 de la position haute vers la position basse et inversement.

Selon une configuration, le système de déplacement 63 comprend au moins une crémaillère ou au moins un actionneur linéaire permettant de déplacer verticalement le fond 62. Bien entendu, l'invention n'est pas limitée à cette configuration pour le système de déplacement 63.

Quel que soit le mode de réalisation, le logement 58 est configuré pour loger les bandes de matière 40, 42 de la structure alvéolaire 30 à réaliser, superposées les unes sur les autres et pour les immobiliser selon une direction perpendiculaire aux première et deuxième faces latérales 58.1, 58.2.

Le fond 62 comprend une face d'appui F62 contre laquelle est positionnée la première bande de matière 40 introduite dans le logement 58.

Selon une configuration, la face d'appui F62 du fond 62 comprend une alternance de formes en creux et de formes planes présentant une géométrie complémentaire à la deuxième face F40' de la première bande de matière 40 déposée. Ainsi, sensiblement toute la deuxième face F40' est en contact avec la face d'appui F62, ce qui permet la reprise des efforts verticaux, orientés vers le bas et appliqués sur la première bande de matière 40.

L'outillage d'assemblage 56 comprend également une pluralité de pions 64 configurés pour être positionnés entre les bandes de matière 40, 42 superposées, dans les première et/ou deuxième alvéoles 36, 38 formées par les formes en creux 44, 46, 50, 52 des bandes de matière 40, 42.

Selon un agencement, l'outillage d'assemblage 56 comprend un pion 64 pour chacune des première et deuxième alvéoles 36, 38 de la structure alvéolaire 30 à réaliser.

Chacun des pions 64 présente une forme approximativement complémentaire à celle de la première ou deuxième alvéole 36, 38 dans laquelle il est positionné. Chaque pion 64 comprend une face latérale en contact avec quasiment toute la surface des parois délimitant la première ou deuxième alvéole 36, 38 dans laquelle le pion est positionné.

Chaque pion 64 est dimensionné de manière à être entièrement logé dans la première ou deuxième alvéole 36, 38 dans laquelle il est positionné et ne pas être en saillie par rapport à la première ou deuxième face 30.1, 30.2 de la structure alvéole 30 à réaliser.

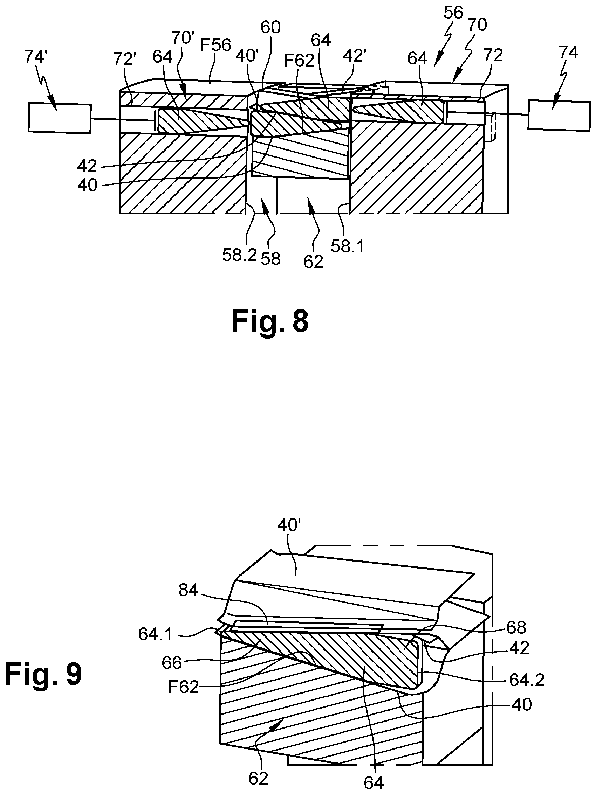

Selon un mode de réalisation visible sur la figure 9, chaque pion 64 s'étend entre des première et deuxième extrémités 64.1, 64.2, la première extrémité 64.1 étant destinée à être positionnée au fond de la première ou deuxième alvéole 36, 38 dans laquelle le pion 64 est positionné, la deuxième extrémité 64.2 étant destinée à être positionnée à proximité ou au niveau de la première ou deuxième face 30.1, 30.2 de la structure alvéolaire 30. Chaque pion 64 présente une pointe 66 et un corps 68, la pointe 66 s'étendant de la première extrémité 64.1 jusqu'au corps 68, le corps 68 s'étendant de la deuxième extrémité 64.2 jusqu'à la pointe 66. Selon une configuration, le corps 68 présente une section transversale (perpendiculaire à une direction s'étendant entre les première et deuxième extrémités 64.1, 64.2) sensiblement constante. La pointe 66 présente une section transversale qui diminue du corps 68 jusqu'à la première extrémité 64.1. Cette pointe 66 favorise l'insertion du pion 64 dans une alvéole 36, 38.

Le logement 58 permet de maintenir les bandes de matière 40, 42 superposées les unes sur les autres lors de l'assemblage. Lorsqu'ils sont positionnés dans les premières et deuxièmes alvéoles 36, 38, les pions 64 permettent d'immobiliser les bandes de matière 40, 42 les unes par rapport aux autres dans des plans horizontaux et limitent les déformations des première et deuxième alvéoles 36, 38 lors de l'assemblage des bandes de matière 40, 42 entre elles.

Les pions 64 peuvent être déposés sur la dernière bande de matière déposée, dans ses formes en creux, et/ou insérés entre les bandes de matière déjà déposées.

Les pions 64 peuvent être déposés manuellement ou de manière automatisée en utilisant par exemple un bras robotisé.

Selon un mode de réalisation, l'outillage d'assemblage 56 comprend au moins un système d'alimentation en pions 70, 70'. Chacun d'eux comporte une pluralité de conduits 72, 72' débouchant sur la première ou deuxième face latérale 58.1, 58.2 du logement 58, au droit d'une rangée de premières ou deuxièmes alvéoles 36, 38 de la structure alvéolaire 30 à réaliser ainsi que, pour chaque conduit 72, 72', un chargeur de pions configuré pour alimenter le conduit 72, 72' en pions et un actionneur 74, 74' configuré pour pousser chaque pion 64 présent au niveau du conduit 72, 72' dans le logement 58, plus particulièrement dans une forme en creux ou une alvéole positionnée dans le prolongement du conduit 72, 72'.

Selon un agencement, l'outillage d'assemblage 56 comprend au moins un premier système d'alimentation en pions 70 positionné au niveau de la première face latérale 58.1 du logement 58 et configuré pour insérer des pions 64 dans les premières alvéoles 36 en fonctionnement ainsi qu'au moins un deuxième système d'alimentation en pions 70' positionné au niveau de la deuxième face latérale 58.2 du logement 58 et configuré pour insérer des pions 64 dans les deuxièmes alvéoles 38 en fonctionnement. Les premiers conduits 72 du premier système d'alimentation en pions 70 sont configurés pour guider les pions 64 destinés aux premières alvéoles 36 de la structure alvéolaire 30, poussés par les premiers actionneurs 74. Ces premiers conduits 72 sont régulièrement répartis dans un premier plan P1 sensiblement parallèle à la face supérieure F56 de l'outillage d'assemblage 56. Les deuxièmes conduits 72' du deuxième système d'alimentation en pions 70' sont configurés pour guider les pions 64 destinés aux deuxièmes alvéoles 38 de la structure alvéolaire 30, poussés par les deuxièmes actionneurs 74'. Ces deuxièmes conduits 72' sont régulièrement répartis dans un deuxième plan P2 sensiblement parallèle au premier plan P1 et décalé de ce dernier d'une distance égale à la distance séparant les plans de jonction J de deux rangées d'alvéoles 34, 34' juxtaposées. En variante, les premier et deuxième plans P1, P2 sont sensiblement coplanaires.

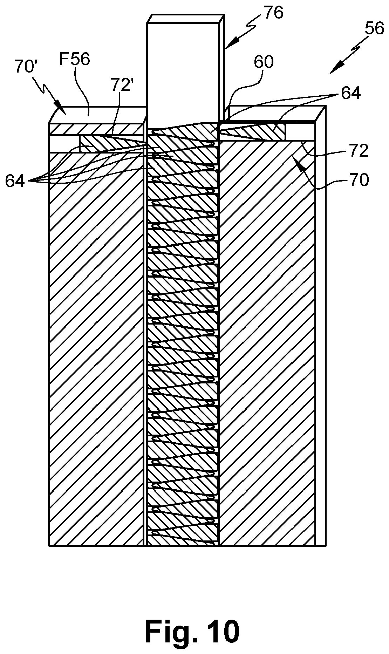

Selon un mode de réalisation visible sur la figure 10, l'outillage d'assemblage 56 comprend un système de compression 76 configuré pour comprimer les bandes de matière 40, 42 les unes contre les autres dans le logement 58 de l'outillage d'assemblage 56. Selon une configuration, ce système de compression 76 comprend une face d'appui configurée pour épouser les formes de la dernière bande de matière 40, 42 déposée. En fonctionnement, le système de compression 76 est plaqué contre la dernière bande de matière déposée et exerce un effort en direction du fond 62.

La présence d'un tel système de compression 76 est plus particulièrement requise lorsque les liaisons entre les bandes de matière sont obtenues par collage.

Selon un mode de réalisation visible sur la figure 5, un dispositif d'assemblage 78 comprend au moins un l'outillage d'assemblage 56, au moins un premier bras robotisé 80 configuré pour déposer les bandes de matière dans le logement 58 de l'outillage d'assemblage 56, au moins un deuxième bras robotisé 82 configuré pour réaliser les liaisons reliant les bandes de matière ainsi qu'au moins une commande configurée pour contrôler, de manière coordonnée, le système de déplacement 63, les actionneurs 74 de l'outillage d'assemblage 56 et les premier et deuxième bras robotisés 80, 82.

Selon une configuration, le premier bras robotisé 80 comprend une tête équipée de ventouses pour saisir les bandes de matière 40, 42. Le deuxième bras robotisé 82 comprend une tête de soudage ou de collage en fonction de la technique d'assemblage utilisée pour relier les bandes de matière entre elles.

Selon un premier mode opératoire, les bandes de matière étant reliées par soudage, le procédé d'assemblage comprend :
- une étape de pose d'une première bande de matière 40 sur le fond 62 par le premier bras robotisé 80,
- une étape de positionnement du fond 62 de manière à ce que la première bande de matière 40 soit positionnée juste au-dessous des premiers conduits 72 du premier système d'alimentation en pions 70,
- une étape de mise en place de pions 64 dans les formes en creux 44 des premières alvéoles 36 de la première bande de matière 40 grâce aux premiers actionneurs 74 du premier système d'alimentation en pions 70,
- une étape de déplacement du fond 62 de manière à ce que la première bande de matière 40 soit positionnée juste au-dessous des deuxièmes conduits 72' du deuxième système d'alimentation en pions 70',
- une étape de mise en place de pions 64 dans les formes en creux 46 des deuxièmes alvéoles 38 de la première bande de matière 40 grâce aux deuxièmes actionneurs 74' du deuxième système d'alimentation en pions 70',
- une étape de pose d'une deuxième bande de matière 42 sur les pions 64 et la première bande de matière 40 par le premier bras robotisé 80,
- une étape de soudage, réalisée par le deuxième bras robotisé 82, afin de relier les première et deuxième bandes de matière 40, 42 au droit des différentes zones de jonction 48, 54,
- une étape de pose d'une nouvelle bande de matière 40', sur la deuxième bande de matière 42, par le premier bras robotisé 80,
- une étape de soudage, réalisée par le deuxième bras robotisé 82, afin de relier les bandes de matière 42, 40' par des soudures 84, comme illustré sur la figure 9, au droit des premières et deuxièmes alvéoles 36, 38.

A l'exception de la première étape, le cycle précédemment décrit est reproduit jusqu'à ce que toutes les bandes de matière soient déposées.

En variante, si les conduits 72, 72' sont disposés en vis-à-vis, approximativement dans le même plan, le procédé comprend, une bande de matière 40 étant déjà positionnée dans le logement 58, :
- au moins une étape de mise en place de pions 64 dans les formes en creux 44, 46 des premières et deuxièmes alvéoles 36, 38 de la dernière bande de matière 40 posée, grâce aux actionneurs 74, 74' des premier et deuxième systèmes d'alimentation en pions 70, 70',
- une étape de pose d'une bande de matière 42, sur les pions 64 et la dernière bande de matière 40 posée, par le premier bras robotisé 80,
- une étape de soudage, réalisée par le deuxième bras robotisé 82, afin de relier les deux dernières bandes de matière 40, 42 posées, au droit des différentes zones de jonction 48, 54,
- une étape de pose d'une bande de matière 40', sur la dernière bande de matière 42 posée, par le premier bras robotisé 80,
- une étape de soudage, réalisée par le deuxième bras robotisé 82, afin de relier les deux dernières bandes de matière 42, 40' posées au droit des premières et deuxièmes alvéoles 36, 38,
- ce cycle d'étapes étant répété jusqu'à ce que toutes les bandes de matière soient déposées, le fond étant déplacé vers le bas, d'un pas, entre chaque cycle.

En fonction du positionnement des premier et deuxième systèmes d'alimentation en pions 70, 70', l'étape de mise en place des pions 64 peut être séparée en deux phases entre lesquelles le fond 62 est déplacé vers le bas, les pions 64 étant positionnés dans les premières alvéoles 36 lors de la première phase et dans les deuxièmes alvéoles 38 lors de la deuxième phase.

Selon un deuxième mode opératoire, les bandes de matière étant reliées par collage, le procédé d'assemblage comprend :
- une étape de pose d'une première bande de matière 40, sur le fond 62, par le premier bras robotisé 80,
- une étape d'enduction de colle de chaque zone de jonction 48 de la première bande de matière 40, réalisée par le deuxième bras robotisé 82,
- une étape de positionnement du fond 62 de manière à ce que la première bande de matière 40 soit positionnée juste au-dessous des premiers conduits 72 du premier système d'alimentation en pions 70,
- une étape de mise en place de pions 64 dans les formes en creux 44 des premières alvéoles 36 de la première bande de matière 40 grâce aux premiers actionneurs 74 du premier système d'alimentation en pions 70,
- une étape de déplacement du fond 62 de manière à ce que la première bande de matière 40 soit positionnée juste au-dessous des deuxièmes conduits 72' du deuxième système d'alimentation en pions 70',
- une étape de mise en place de pions 64 dans les formes en creux 46 des deuxièmes alvéoles 38 de la première bande de matière 40 grâce aux deuxièmes actionneurs 74' du deuxième système d'alimentation en pions 70',
- une étape de pose d'une deuxième bande de matière 42, sur les pions 64 et la première bande de matière 40, par le premier bras robotisé 80,
- une étape d'enduction de colle des formes en saillie de la deuxième bande de matière 42, réalisée par le deuxième bras robotisé 82,
- une étape de pose d'une nouvelle bande de matière 40', sur la deuxième bande de matière 42, par le premier bras robotisé 80.

A l'exception de la première étape, le cycle précédemment décrit est reproduit jusqu'à ce que toutes les bandes de matière soient déposées.

En variante, l'étape d'enduction (b) peut être réalisée indifféremment après l'une des étapes (c) à (f).

De plus, si les conduits 72, 72' sont disposés en vis-à-vis, approximativement dans le même plan, le procédé comprend :
- une étape de pose, par le premier bras robotisé 80, d'une bande de matière 40 sur le fond 62 ou sur la dernière bande de matière posée,
- une étape d'enduction de colle de chaque zone de jonction 48 de la dernière bande de matière 40 posée, réalisée par le deuxième bras robotisé 82,
- au moins une étape de mise en place de pions 64 dans les formes en creux 44, 46 des premières et deuxièmes alvéoles 36, 38 de la dernière bande de matière 40 posée grâce aux actionneurs 74, 74' des premier et deuxième systèmes d'alimentation en pions 70, 70',
- une étape de pose, par le premier bras robotisé 80, d'une bande de matière 42 sur les pions 64 et la dernière bande de matière 40 posée,
- une étape d'enduction de colle des formes en saillie de la dernière bande de matière 42 posée, réalisée par le deuxième bras robotisé 82,
- ce cycle d'étapes étant répété jusqu'à ce que toutes les bandes de matière soient déposées, le fond 62 étant déplacé vers le bas, d'un pas, entre chaque cycle.

En fonction du positionnement des premier et deuxième systèmes d'alimentation en pions 70, 70', l'étape de mise en place des pions 64 peut être séparée entre deux phases entre lesquelles le fond 62 est déplacé vers le bas, les pions 64 étant positionnés dans les premières alvéoles 36 lors de la première phase et dans les deuxièmes alvéoles 38 lors de la deuxième phase.

Après la mise en place de la dernière bande de matière, le système de compression 76 est positionné, comme illustré sur la figure 9, pour comprimer les bandes de matière les unes contre les autres lors d'une étape de cuisson ou de polymérisation.

Quel que soit le mode opératoire, lorsque les bandes de matière sont reliées entre elles, la structure alvéolaire 30 est sortie du logement 58, en translatant le fond 62 vers le haut par exemple. En suivant, les pions 64 sont retirés des alvéoles 36, 38.

La structure alvéolaire 30 est alors prête à être intégrée dans un revêtement d'absorption acoustique 26 entre une couche poreuse 28 et une couche réflectrice 32.

Selon les modes opératoires précédemment décrits, les premières et deuxièmes alvéoles 36, 38 étant positionnées au niveau d'une zone entre deux bandes de matière sur deux, le procédé comprend une succession de cycles comportant chacun une étape de mise en place de pions 64, deux étapes de pose de bandes de matière 40, 42 et deux étapes de jonction des bandes de matière 40, 42, ces cycles étant répétés jusqu'à ce que toutes les bandes de matière soient déposées, le fond 62 étant déplacé vers le bas, d'un pas, entre chaque cycle.

Selon d'autres modes de réalisation, les premières et deuxièmes alvéoles 36, 38 étant positionnées au niveau de chaque zone entre deux bandes de matière, le procédé comprend une succession de cycles comportant une étape de mise en place de pions 64, une étape de pose d'une bande de matière et une étape de jonction des bandes de matière, l'ordre de ces étapes variant en fonction de la technique d'assemblage utilisée, ces cycles étant répétés jusqu'à ce que toutes les bandes de matière soient déposées, le fond 62 étant déplacé vers le bas, d'un pas, entre chaque cycle.

## Revendications

1. Outillage d'assemblage d'une structure alvéolaire (30) comprenant des première et deuxième faces (30.1, 30.2) ainsi que plusieurs rangées (34, 34') d'alvéoles (36, 38) comportant chacune deux bandes de matière (40, 42) accolées, chaque bande de matière (40, 42) présentant des formes en creux (44, 46, 50, 52) et des zones de jonction (48, 54) agencées de manière à former, lorsque les bandes de matière (40, 42) sont reliées, des premières alvéoles (36) présentant chacune une première ouverture (36.1) débouchant au niveau de la première face (30.1) et une section transversale qui augmente en direction de la première face (30.1) ainsi que des deuxièmes alvéoles (38) présentant chacune une deuxième ouverture (38.1) débouchant au niveau de la deuxième face (30.2) et une section transversale qui augmente en direction de la deuxième face (30.2) ; **caractérisé en ce que** l'outillage d'assemblage comprend :
- un logement (58) délimité par un fond (62) ainsi que des première et deuxième faces latérales (58.1, 58.2), configuré pour loger les bandes de matière (40, 42) d'une structure alvéolaire (30) à réaliser, superposées les unes sur les autres,
- une pluralité de pions (64) configurés pour être positionnés entre les bandes de matière (40, 42) superposées, dans les première et/ou deuxième alvéoles (36, 38).

2. Outillage d'assemblage selon la revendication 1, **caractérisé en ce que** le fond (62) est mobile dans le logement (58) selon une direction parallèle aux première et deuxième faces latérales (58.1, 58.2).

3. Outillage d'assemblage selon l'une des revendications précédentes, **caractérisé en ce que** le fond (62) comprend une face d'appui (F62) contre laquelle est positionnée une première bande de matière (40) déposée, ladite face d'appui (F62) présentant une géométrie complémentaire à celle de la première bande de matière (40) déposée.

4. Outillage d'assemblage selon l'une des revendications précédentes, **caractérisé en ce que** l'outillage d'assemblage (56) comprend un pion (64) pour chacune des première et deuxième alvéoles (36, 38) de la structure alvéolaire (30) à réaliser.

5. Outillage d'assemblage selon l'une des revendications précédentes, **caractérisé en ce que** chaque pion (64) est dimensionné de manière à être entièrement logé dans la première ou deuxième alvéole (36, 38) dans laquelle il est positionné en fonctionnement.

6. Outillage d'assemblage selon l'une des revendications précédentes, **caractérisé en ce que** chaque pion (64) présente une forme approximativement complémentaire à celle de la première ou deuxième alvéole (36, 38) dans laquelle il est positionné en fonctionnement.

7. Outillage d'assemblage selon l'une des revendications précédentes, **caractérisé en ce que** l'outillage d'assemblage (56) comprend au moins un système d'alimentation en pions (70, 70') comportant une pluralité de conduits (72, 72') débouchant au niveau de la première ou deuxième face latérale (58.1, 58.2) du logement (58) ainsi que, pour chaque conduit (72, 72'), un chargeur de pions configuré pour alimenter le conduit (72, 72') en pions et un actionneur (74, 74') configuré pour pousser un pion (64) présent au niveau du conduit (72, 72') dans le logement (58).

8. Outillage d'assemblage selon la revendication précédente, **caractérisé en ce que** l'outillage d'assemblage (56) comprend au moins un premier système d'alimentation en pions (70) positionné au niveau de la première face latérale (58.1) du logement (58) et configuré pour insérer des pions (64) dans les premières alvéoles (36) en fonctionnement ainsi qu'au moins un deuxième système d'alimentation en pions (70') positionné au niveau de la deuxième face latérale (58.2) du logement (58) et configuré pour insérer des pions (64) dans les deuxièmes alvéoles (38) en fonctionnement.

9. Outillage d'assemblage selon l'une des revendications précédentes, **caractérisé en ce que** l'outillage d'assemblage (56) comprend un système de compression (76) configuré pour comprimer les bandes de matière (40, 42) les unes contre les autres dans le logement (58).

10. Dispositif d'assemblage comprenant un outillage d'assemblage selon l'une des revendications précédentes, au moins un premier bras robotisé (80) configuré pour déposer les bandes de matière dans le logement (58) de l'outillage d'assemblage (56), au moins un deuxième bras robotisé (82) configuré pour relier les bandes de matière entre elles ainsi qu'au moins une commande configurée pour contrôler de manière coordonnée le système de déplacement (63), des actionneurs (74) de l'outillage d'assemblage (56) et les premier et deuxième bras robotisés (80, 82).

11. Procédé d'assemblage d'une structure alvéolaire (30) utilisant l'outillage d'assemblage selon l'une des revendications 1 à 10, **caractérisé en ce que** le procédé comprend une succession de cycles comportant une étape de mise en place de pions (64), une étape de pose d'une bande de matière (40, 42) et une étape de jonction des bandes de matière (40, 42), ces cycles étant répétés jusqu'à ce que toutes les bandes de matière soient déposées, le fond (62) étant déplacé vers le bas entre chaque cycle

12. Procédé d'assemblage d'une structure alvéolaire (30) utilisant le dispositif d'assemblage selon l'une des revendications 1 à 10, **caractérisé en ce que** le procédé comprend :
- au moins une étape de mise en place de pions (64) dans les formes en creux (44, 46) des premières et deuxièmes alvéoles (36, 38) de la dernière bande de matière (40) posée,
- une étape de pose d'une bande de matière (42) sur les pions (64) et la dernière bande de matière (40) posée,
- une étape de soudage afin de relier les deux dernières bandes de matière (40, 42) posées, au droit des différentes zones de jonction (48, 54),
- une étape de pose d'une bande de matière (40') sur la dernière bande de matière (42) posée,
- une étape de soudage afin de relier les deux dernières bandes de matière (42, 40') posées au droit des premières et deuxièmes alvéoles (36, 38),
- ce cycle d'étapes étant répété jusqu'à ce que toutes les bandes de matière soient déposées, le fond (62) étant déplacé vers le bas entre chaque cycle.

13. Procédé d'assemblage d'une structure alvéolaire (30) utilisant le dispositif d'assemblage selon l'une des revendications 1 à 10, **caractérisé en ce que** le procédé comprend :
- une étape de pose d'une bande de matière (40) sur le fond (62) ou sur la dernière bande de matière posée,
- une étape d'enduction de colle de chaque zone de jonction (48) de la dernière bande de matière (40) posée,
- au moins une étape de mise en place de pions (64) dans les formes en creux (44, 46) des premières et deuxièmes alvéoles (36, 38) de la dernière bande de matière (40) posée,
- une étape de pose d'une bande de matière (42) sur les pions (64) et la dernière bande de matière (40) posée,
- une étape d'enduction de colle des formes en saillie de la dernière bande de matière (42) posée,
- ce cycle d'étapes étant répété jusqu'à ce que toutes les bandes de matière soient déposées, le fond (62) étant déplacé vers le bas entre chaque cycle.

## Patentansprüche

1. Werkzeug zum Zusammenbau einer Wabenstruktur (30), die eine erste und eine zweite Seite (30.1, 30.2) sowie mehrere Reihen (34, 34') von Waben (36, 38) aufweisen, die jeweils zwei aneinandergefügte Materialstreifen (40, 42) umfassen, wobei jeder Materialstreifen (40, 42) vertiefte Formen (44, 46, 50, 52) und Verbindungszonen (48, 54) aufweist, die so angeordnet sind, dass sie, wenn die Materialstreifen (40, 42) miteinander verbunden sind, erste Waben (36) bilden, die jeweils eine erste Öffnung (36.1), die sich im Bereich der ersten Seite (30.1) öffnet, und einen Querschnitt aufweisen, der in Richtung der ersten Seite (30.1) zunimmt, sowie zweite Waben (38) bilden, die jeweils eine zweite Öffnung (38.1), die sich im Bereich der zweiten Seite (30.2) öffnet, und einen Querschnitt aufweisen, der in Richtung der zweiten Seite (30.2) zunimmt, **dadurch gekennzeichnet, dass** das Montagewerkzeug aufweist:
- eine Aufnahme (58), die von einem Boden (62) sowie einer ersten und einer zweiten Seitenfläche (58.1, 58.2) begrenzt ist und so gestaltet ist, dass sie die Materialstreifen (40, 42) einer herzustellenden Wabenstruktur (30) übereinanderliegend aufnimmt,
- eine Vielzahl von Stiften (64), die so eingerichtet sind, dass sie zwischen den übereinander liegenden Materialstreifen (40, 42) in der ersten und/oder zweiten Wabe (36, 38) positioniert werden können.

2. Montagewerkzeug nach Anspruch 1, **dadurch gekennzeichnet, dass** der Boden (62) in der Aufnahme (58) in eine Richtung parallel zur ersten und zweiten Seitenfläche (58.1, 58.2) beweglich ist.

3. Montagewerkzeug nach einem der vorhergehenden Ansprüche, **dadurch gekennzeichnet, dass** der Boden (62) eine Auflagefläche (F62) umfasst, gegen die ein erster abgelegter Materialstreifen (40) positioniert ist, wobei die Auflagefläche (F62) eine Geometrie aufweist, die komplementär zu der des ersten abgelegten Materialstreifens (40) ist.

4. Montagewerkzeug nach einem der vorhergehenden Ansprüche, **dadurch gekennzeichnet, dass** das Montagewerkzeug (56) einen Stift (64) für jede der ersten und zweiten Waben (36, 38) der herzustellenden Wabenstruktur (30) aufweist.

5. Montagewerkzeug nach einem der vorhergehenden Ansprüche, **dadurch gekennzeichnet, dass** jeder Stift (64) so dimensioniert ist, dass er sich vollständig in der ersten oder zweiten Wabe (36, 38) befindet, in die er im Betrieb positioniert ist.

6. Montagewerkzeug nach einem der vorhergehenden Ansprüche, **dadurch gekennzeichnet, dass** jeder Stift (64) eine Form aufweist, die ungefähr komplementär zu derjenigen der ersten oder zweiten Wabe (36, 38) ist, in der er im Betrieb positioniert ist.

7. Montagewerkzeug nach einem der vorhergehenden Ansprüche, **dadurch gekennzeichnet, dass** das Montagewerkzeug (56) wenigstens ein Stiftzuführsystem (70, 70') umfasst, das eine Vielzahl von Kanälen (72, 72') aufweist, die im Bereich der ersten oder zweiten Seitenfläche (58.1, 58.2) der Aufnahme (58) münden, sowie für jede Leitung (72, 72') einen Stiftlader aufweist, der so eingerichtet ist, dass er den Kanal (72, 72') mit Stiften versorgt, und einen Aktuator (74, 74'), der so eingerichtet ist, dass er einen im Bereich des Kanals (72, 72') vorhandenen Stift (64) in die Aufnahme (58) drückt.

8. Montagewerkzeug nach dem vorhergehenden Anspruch, **dadurch gekennzeichnet, dass** das Montagewerkzeug (56) wenigstens ein erstes Stiftzuführsystem (70) aufweist, das im Bereich der ersten Seitenfläche (58.1) der Aufnahme (58) angeordnet und so eingerichtet ist, dass es im Betrieb Stifte (64) in die ersten Waben (36) einführt, sowie wenigstens ein zweites Stiftzuführsystem (70') aufweist, das im Bereich der zweiten Seitenfläche (58.2) der Aufnahme (58) angeordnet und so eingerichtet ist, dass es im Betrieb Stifte (64) in die zweiten Waben (38) einführt.

9. Montagewerkzeug nach einem der vorhergehenden Ansprüche, **dadurch gekennzeichnet, dass** das Montagewerkzeug (56) ein Kompressionssystem (76) umfasst, das so eingerichtet ist, dass es die Materialstreifen (40, 42) in der Aufnahme (58) gegeneinander zusammenpresst.

10. Montagevorrichtung mit einem Montagewerkzeug nach einem der vorhergehenden Ansprüche, mit wenigstens einem ersten Roboterarm (80), der so eingerichtet ist, dass er die Materialstreifen in der Aufnahme (58) des Montagewerkzeugs (56) ablegt, mit wenigstens einen zweiten Roboterarm (82), der zum Verbinden der Materialstreifen untereinander eingerichtet ist, sowie mit wenigstens einer Steuerung, die zum koordinierten Steuern des Bewegungssystems (63), von Aktuatoren (74) des Montagewerkzeugs (56) und des ersten und zweiten Roboterarms (80, 82) eingerichtet ist.

11. Verfahren zum Zusammenbau einer Wabenstruktur (30) unter Verwendung des Montagewerkzeugs nach einem der Ansprüche 1 bis 10, **dadurch gekennzeichnet, dass** das Verfahren eine Folge von Zyklen umfasst, die einen Schritt des Positionierens von Stiften (64), einen Schritt des Ablegens eines Materialstreifens (40, 42) und einen Schritt des Verbindens der Materialstreifen (40, 42) aufweisen, wobei diese Zyklen wiederholt werden, bis alle Materialstreifen abgelegt sind, wobei der Boden (62) zwischen jedem Zyklus nach unten verschoben wird.

12. Verfahren zum Zusammenbau einer Wabenstruktur (30) unter Verwendung der Montagevorrichtung nach einem der Ansprüche 1 bis 10, **dadurch gekennzeichnet, dass** das Verfahren aufweist:
- wenigstens einen Schritt des Positionierens von Stiften (64) in die vertieften Formen (44, 46) der ersten und zweiten Waben (36, 38) des zuletzt abgelegten Materialstreifens (40),
- einen Schritt des Ablegens eines Materialstreifens (42) über den Stiften (64) und dem zuletzt abgelegten Materialstreifen (40),
- einen Schweißschritt, um die beiden zuletzt abgelegten Materialstreifen (40, 42) an den verschiedenen Verbindungsbereichen (48, 54) zu verbinden,
- einen Schritt des Ablegens eines Materialstreifens (40') auf dem zuletzt abgelegten Materialstreifen (42),
- einen Schweißschritt, um die beiden letzten Materialstreifen (42, 40'), die an den ersten und zweiten Waben (36, 38) abgelegt wurden, miteinander zu verbinden,
- wobei dieser Zyklus von Schritten wiederholt wird, bis alle Materialstreifen abgelegt sind, wobei der Boden (62) zwischen jedem Zyklus nach unten bewegt wird.

13. Verfahren zum Zusammenbau einer Wabenstruktur (30) unter Verwendung der Montagevorrichtung nach einem der Ansprüche 1 bis 10, **dadurch gekennzeichnet, dass** das Verfahren aufweist:
- einen Schritt des Ablegens eines Materialstreifens (40) auf dem Boden (62) oder auf den zuletzt abgelegten Materialstreifen,
- einen Schritt des Beschichtens jedes Verbindungsbereichs (48) des zuletzt abgelegten Materialstreifens (40) mit Klebstoff,
- wenigstens einen Schritt des Positionierens von Stiften (64) in die vertieften Formen (44, 46) der ersten und zweiten Waben (36, 38) des zuletzt verlegten Materialstreifens (40),
- einen Schritt des Ablegens eines Materialstreifens (42) auf die Stifte (64) und den zuletzt abgelegten Materialstreifen (40),
- einen Schritt des Beschichtens der hervorstehenden Formen des zuletzt abgelegten Materialstreifens (42) mit Klebstoff,
- wobei dieser Zyklus von Schritten wiederholt wird, bis alle Materialstreifen abgelegt sind, wobei der Boden (62) zwischen jedem Zyklus nach unten bewegt wird.

## Claims

1. Assembly jig for a cellular structure (30) comprising first and second faces (30.1, 30.2) and a plurality of rows (34, 34') of cells (36, 38), each comprising two strips of material (40, 42) placed adjacent to each other, each strip of material (40, 42) having hollow shapes (44, 46, 50, 52) and junction areas (48, 54) arranged so as to form, when the strips of material (40, 42) are joined, first cells (36), each having a first opening (36.1) that opens on the first face (30.1) and a cross section that increases toward the first face (30.1), and second cells (38), each having a second opening (38.1) that opens on the second face (30.2) and a cross section that increases toward the second face (30.2), **characterized in that** the assembly jig comprises:
- a housing (58) delimited by a base (62) and first and second side faces (58.1, 58.2), configured for housing the strips of material (40, 42) of a cellular structure (30) to be formed, superimposed on each other,
- a plurality of pins (64) configured to be positioned between the superimposed strips of material (40, 42) in the first and/or second cells (36, 38).

2. Assembly jig as claimed in claim 1, **characterized in that** the base (62) is movable in the housing (58) in a direction parallel to the first and second side faces (58.1, 58.2).

3. Assembly jig as claimed in any of the preceding claims, **characterized in that** the base (62) comprises a bearing face (F62) against which a first deposited strip of material (40) is positioned, said bearing face (F62) having a geometry complementary to that of the first strip of material (40) deposited.

4. Assembly jig as claimed in any of the preceding claims, **characterized in that** the assembly jig (56) comprises a pin (64) for each of the first and second cells (36, 38) of the cellular structure (30) to be formed.

5. Assembly jig as claimed in any of the preceding claims, **characterized in that** each pin (64) is designed so as to be fully housed in the first or second cell (36, 38) in which it is positioned in operation.

6. Assembly jig as claimed in any of the preceding claims, **characterized in that** each pin (64) has a shape approximately complementary to that of the first or second cell (36, 38) in which it is positioned in operation.

7. Assembly jig as claimed in any of the preceding claims, **characterized in that** the assembly jig (56) comprises at least one pin feed system (70, 70') comprising a plurality of conduits (72, 72') opening on the first or second side face (58.1, 58.2) of the housing (58), and, for each conduit (72, 72'), a pin loader configured for feeding pins to the conduit (72, 72') and an actuator (74, 74') configured for pushing a pin (64) present in the conduit (72, 72') into the housing (58).

8. Assembly jig as claimed in the preceding claim, **characterized in that** the assembly jig (56) comprises at least a first pin feed system (70), positioned on the first side face (58.1) of the housing (58) and configured for inserting pins (64) into the first cells (36) in operation, and at least a second pin feed system (70') positioned on the second side face (58.2) of the housing (58) and configured for inserting pins (64) into the second cells (38) in operation.

9. Assembly jig as claimed in any of the preceding claims, **characterized in that** the assembly jig (56) comprises a compression system (76) configured for compressing the strips of material (40, 42) against each other in the housing (58).

10. Assembly device comprising an assembly jig as claimed in any of the preceding claims, at least a first robotic arm (80) configured for depositing the strips of material in the housing (58) of the assembly jig (56), at least a second robotic arm (82) configured for joining the strips of material to each other, and at least one controller configured for controlling the movement system (63), actuators (74) of the assembly jig (56) and the first and second robotic arms (80, 82).

11. Method for assembling a cellular structure (30) using the assembly jig as claimed in any of claims 1 to 10, **characterized in that** the method comprises a sequence of cycles comprising a step of positioning pins (64), a step of depositing a strip of material (40, 42) and a step of joining the strips of material (40, 42), these cycles being repeated until all the strips of material have been deposited, the base (62) being moved downward between each cycle.

12. Method for assembling a cellular structure (30) using the assembly device as claimed in any of claims 1 to 10, **characterized in that** the method comprises:
- at least one step of positioning pins (64) in the hollow shapes (44, 46) of the first and second cells (36, 38) of the last strip of material (40) deposited,
- a step of depositing a strip of material (42) on the pins (64) and the last strip of material (40) deposited,
- a step of welding for joining the last two strips of material (40, 42) deposited, at the various junction areas (48, 54),
- a step of depositing a strip of material (40') on the last strip of material (42) deposited,
- a step of welding for joining the last two strips of material (42, 40') deposited, at the first and second cells (36, 38),
- this cycle of steps being repeated until all the strips of material have been deposited, the base (62) being moved downward between each cycle.

13. Method for assembling a cellular structure (30) using the assembly device as claimed in any of claims 1 to 10, **characterized in that** the method comprises:
- a step of depositing a strip of material (40) on the base (62) or on the last strip of material deposited,
- a step of spreading adhesive on each junction area (48) of the last strip of material (40) deposited,
- at least one step of positioning pins (64) in the hollow shapes (44, 46) of the first and second cells (36, 38) of the last strip of material (40) deposited,
- a step of depositing a strip of material (42) on the pins (64) and the last strip of material (40) deposited,
- a step of spreading adhesive on the projecting shapes of the last strip of material (42) deposited,
- this cycle of steps being repeated until all the strips of material have been deposited, the base (62) being moved downward between each cycle.
